# EUROPEAN PATENT APPLICATION

(11) **EP 4 560 780 A1**
(43) Date of publication of application: **28.05.2025**
(21) Application number: 23211848.9
(22) Date of filing: 23.11.2023
(51) Int. Cl.: H01M 10/48, H01M 10/42, B60L 50/64, G01K 15/00, G01R 31/36

(54) **METHOD AND BATTERY SYSTEM FOR DETERMINING A THERMAL COUPLING BETWEEN A TEMPERATURE SENSOR AND A BATTERY CELL OF A BATTERY SYSTEM**

(71) Applicant: Samsung SDI Co., Ltd., Yongin-si, Gyeonggi-do 17084 (KR)
(72) Inventor: Erhart, Michael, 8054 Seiersberg-Pirka (AT)
(74) Representative: Gulde & Partner

(57) **Abstract**

The present disclosure refers to a method for determining a thermal coupling between a temperature sensor (14) and a battery cell (12) of a battery system (100), the method comprising: heating the temperature sensor (14) by applying a heating current to the temperature sensor (14), the heating current being supplied by a high voltage side of the battery system (100), determining the temperature or a temperature-dependent property of the temperature sensor (14), comparing the determined temperature or temperature-dependent property with a first predefined threshold, determining a reduced thermal coupling between the temperature sensor (14) and the battery cell (12) if the determined temperature or temperature-dependent property is higher than the first predefined threshold.

## Description

### Field of the Disclosure

The present disclosure relates to a method for determining a thermal coupling between a temperature sensor and a battery cell of a battery system. The present disclosure further relates to a battery system adapted to determine a thermal coupling between a temperature sensor and a battery cell of a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. The temperature of one or more battery cells of the battery system thus has to be monitored.

For this reason, temperature sensors are placed externally to the battery cells for detecting the temperature of the battery cells. Such temperature sensors are typically glued or pressed onto the cell surface of a battery cell to provide for a sufficient thermal contact. However, over the lifetime of the battery system the connection between the cell surface and temperature sensor may weaken, for example because of vibrations, fabrication issues or a weakening adhesive bond. The temperature sensor may even become completely detached from the cell surface. Such weakening or breakdown of the connection between the temperature sensor and the cell surface may be called a "sensor lift off'. As a result, the thermal contact or connection between the temperature sensor and the cell surface may deteriorate or break down so that the temperature sensor is no longer able to reliably measure the temperature of the battery cell.

It is thus an object of the present invention to overcome or reduce at least some of the drawbacks of the prior art and to provide a means for determining the thermal coupling between a temperature sensor of a battery module and the battery cells of battery module.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a method is provided for determining a thermal coupling between a temperature sensor and a battery cell of a battery system, the method including: heating the temperature sensor by applying a heating current to the temperature sensor, the heating current being supplied by a high voltage side of the battery system, determining the temperature or a temperature-dependent property of the temperature sensor, comparing the determined temperature or temperature-dependent property with a first predefined threshold, determining a reduced thermal coupling between the temperature sensor and the battery cell if the determined temperature or temperature-dependent property is higher than the first predefined threshold.

According to an aspect of the present disclosure, the determining of the temperature or temperature-dependent property of the temperature sensor includes applying a measuring voltage to the temperature sensor, measuring a voltage drop over the temperature sensor and determining the temperature or temperature-dependent property of the temperature sensor based on the voltage drop.

According to an aspect of the present disclosure, the measuring voltage is supplied by a low voltage side of the battery system, the low voltage side being adapted to provide power for a battery management system of the battery system.

According to an aspect of the present disclosure, a switching element is interconnected between the high voltage side of the battery system and the temperature sensor, wherein the method includes: closing the switching element to apply the heating current to the temperature sensor by establishing the connection between the high voltage side of the battery system and the temperature sensor, and opening the switching element before the determining of the temperature or temperature-dependent property of the temperature sensor.

According to an aspect of the present disclosure, the method further includes: comparing the determined temperature or temperature-dependent property with a second predefined threshold, the second predefined threshold being the same or lower than the first predefined threshold, determining a defective sensor heating of the temperature sensor if the determined temperature or temperature-dependent property is lower than the second predefined threshold.

According to an aspect of the present disclosure, the method is performed at a system start-up of the battery system.

According to an aspect of the present disclosure, a battery system is provided which is adapted to determine a thermal coupling between a temperature sensor and a battery cell of a battery system, the battery system including: a housing, a plurality of battery cells disposed in the housing, the plurality of battery cells providing a high voltage side of the battery system, a temperature sensor, a switching element interconnected between the high voltage side of the battery system and the temperature sensor, wherein a first node of the temperature sensor is connected to the switching element and second node of the temperature sensor is connected to ground, wherein the switching element is switchable between a closed position where the switching element establishes a connection between the high voltage side of the battery system and the temperature sensor for applying a heating current to the temperature sensor, and an open position where the connection between the high voltage side of the battery system and the temperature sensor is interrupted, a control unit, the control unit being adapted to: close the switching element to apply the heating current to the temperature sensor by establishing the connection between the high voltage side of the battery system and the temperature sensor, determine the temperature or a temperature-dependent property of the temperature sensor, compare the determined temperature or temperature-dependent property with a first predefined threshold temperature, determine a reduced thermal coupling between the temperature sensor and the battery cell if the determined temperature or temperature-dependent property is higher than the first predefined threshold temperature.

According to an aspect of the present disclosure, the control unit is adapted to determine the temperature or temperature-dependent property of the temperature sensor by applying a measuring voltage to the temperature sensor via a measuring circuit, measuring a voltage drop over the temperature sensor and determining the temperature or temperature-dependent property of the temperature sensor based on the voltage drop.

According to an aspect of the present disclosure, the battery system includes a diode connected to the first node of the temperature sensor for limiting a voltage in the measuring circuit when the heating current is applied to the temperature sensor.

According to an aspect of the present disclosure, the battery system includes a low voltage side adapted to provide power for a battery management system of the battery system, wherein the measuring voltage is supplied by the low voltage side of the battery system.

According to an aspect of the present disclosure, the control unit is adapted to open the switching element before determining of the temperature or temperature-dependent property of the temperature sensor.

According to an aspect of the present disclosure, the control unit is adapted to compare the determined temperature or temperature-dependent property with a second predefined threshold, the second predefined threshold being the same or lower than the first predefined threshold, determine a defective sensor heating of the temperature sensor if the determined temperature or temperature-dependent property is lower than the second predefined threshold.

According to an aspect of the present disclosure, the control unit is part of a battery management system of the battery system.

According to an aspect of the present disclosure, the battery system includes a resistor arranged between the switching element and the temperature sensor for limiting the current flow through the temperature sensor.

Yet another aspect of the present disclosure refers to an electric vehicle including the battery system according to any one of the above aspects.

Further aspects of the present disclosure could be learned from the dependent claims or the following description. In the following description, both the method and the battery system will be detailed wherein explanations or details provided for the method may also apply to the battery system and vice versa. The battery system according to the disclosure may be adapted to perform the method according to the disclosure.

### Brief Description of the Drawings

Features will become apparent to those of ordinary skill in the art by describing in detail exemplary embodiments with reference to the attached drawings in which:
- Fig. 1: illustrates a schematic circuit diagram of a battery system according to an embodiment.
- Fig. 2: illustrates a flow chart of a method according to an embodiment.
- Fig. 3: illustrates schematically temperature curves determined with the method and battery system of Fig. 1, 2.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a method for determining a thermal coupling between a temperature sensor and a battery cell of a battery system is provided. The method may be performed by a battery system according to an aspect of the present disclosure.

The battery system includes a housing and a plurality of battery cells arranged inside the housing. The plurality of battery cells may be arranged or stacked and electrically interconnected to form one or more battery packs and/or battery modules. At least some, or all, of the battery cells of the plurality of battery cells are electrically interconnected such that they form a high voltage side of the battery system. For this, the battery cells may be electrically interconnected in series so that their output voltages add up. The high voltage side of the battery system may provide power to the electric motor(s) of an electric vehicle. The high voltage side may provide a voltage level of 100 V to several 100 V. The battery system may further include a low voltage side, wherein the battery system may include a converter, for example a (bidirectional) DC-DC converter, adapted to transfer energy between the high voltage side and the low voltage side in one or both directions. The low voltage side of the battery system may provide power to the battery management system, BMS. The low voltage side may provide a voltage level of for example 12 V, 24 V, or 48 V.

The battery system further includes a temperature sensor for measuring the temperature of at least one of the battery cells of the plurality of battery cells. In other words, the temperature sensor has the purpose of monitoring the temperature of at least one of the battery cells. For this purpose, the temperature sensor may be attached, for example glued, to an outer surface of the battery cell or pressed onto the outer surface of the battery cell. The temperature sensor is thus thermally coupled to the battery cell such that a heat transfer may occur between the battery cell and the temperature sensor which may allow the temperature sensor to determine/measure the temperature of the battery cell. The temperature sensor may include a thermistor or consist of a thermistor, for example a Negative Temperature Coefficient (NTC) thermistor. The resistance of a thermistor changes depending on the temperature. For example, with NTC thermistors, resistance decreases as temperature rises. From a change in resistance, a change in temperature may be derived.

The battery system further includes a switching element interconnected between the high voltage side of the battery system and the temperature sensor. The switching element may include or consist of a transistor. A first node of the temperature sensor is connected to the switching element and second node of the temperature sensor is connected to ground. The switching element is adapted to be switched between a closed position where the switching element establishes a connection between the high voltage side of the battery system and the temperature sensor, and an open position where the connection between the high voltage side of the battery system and the temperature sensor is interrupted. Thus, the switching element is adapted to switch on/off a connection between the high voltage side of the battery system and temperature sensor. When the connection is established, the high voltage side of the battery system applies a heating current to the temperature sensor. That is, the high voltage side of the battery system applies a current to the temperature sensor that is high enough to heat the temperature sensor. Typically, thermistors, for example NTC thermistors, are adapted to not self-heat during normal operation. With the higher voltage and thus heating current provided from the high voltage side of the battery system, however, the intended heat up may be achieved.

According to an aspect of the disclosure, the method includes the subsequently explained steps. The battery system includes a control unit, for example the BMS, that is adapted to perform the subsequently explained steps.

In a first step, the temperature sensor is heated by applying the heating current from the high voltage side of the battery system to the temperature sensor. That is, the control unit may close the switching element thereby establishing the connection between the high voltage side of the battery system and the temperature sensor. Thus, a high current is provided to the temperature sensor, the high current being high enough to heat up the temperature sensor. As the temperature of the temperature sensor rises, the electrical resistance of the temperature sensor may change if the temperature sensor is or includes a thermistor. For example, if the temperature sensor includes an NTC thermistor, the electrical resistance may decrease.

In a second step, the temperature or temperature-dependent property of the temperature sensor is determined. This determination may be performed after the heating of the temperature sensor is stopped, for example by opening the switching element and thus disconnecting the temperature sensor from the high voltage side of the battery system. The temperature or temperature-dependent property may be determined based on the change in resistance of the temperature sensor. The change in resistance may, for example, be determined based on a change of a measuring voltage applied to the temperature sensor. The temperature-dependent property may be the electrical resistance of the temperature sensor. Thus, the electrical resistance of the temperature sensor may be determined. From the determined electrical resistance, the temperature of the temperature sensor may be determined. For example, a first temperature value (or a value of a temperature-dependent property, e.g. the electrical resistance or the voltage drop) of the temperature sensor may be determined at a first time point, e.g. at the beginning or before the heating step, and a second temperature value (or a value of a temperature-dependent property, e.g. the electrical resistance or the voltage drop) of the temperature sensor may be determined at a second time point after a predetermined time span of heating. The temperature (or the value of a temperature-dependent property, e.g. the electrical resistance or the voltage drop) may be determined stepwise or continuously. Thus, a temperature curve over time may be determined (or a curve over time of the temperature-dependent property, e.g. the electrical resistance or the voltage drop).

In a third step, the determined temperature or temperature-dependent property is compared with a first predefined threshold. For example, if a temperature is determined, the determined temperature may be compared to a first predefined threshold temperature. If a temperature-dependent property is determined, e.g. the electrical resistance, the determined temperature-dependent property may be compared to a first predefined threshold of the temperature-dependent property. One or more determined temperature or temperature-dependent property values may be compared with one or more first predefined thresholds. For example, a determined temperature curve may be compared to a predefined temperature curve. The predefined temperature curve may be a "normal case" of the temperature sensor heating up moderately which is to expected from a temperature sensor having a sufficient thermal coupling with the battery cell. That is, the first predefined threshold may be chosen such that is exceeds a threshold which would usually be reached if the temperature sensor were correctly attached to the battery cell and thus have the intended thermal coupling.

In a fourth step, it is determined whether a reduced thermal coupling between the temperature sensor and the battery cell is present if the determined temperature or temperature-dependent property is higher than the first predefined threshold. In other words, should the previous comparison give the result that the determined temperature or temperature-dependent property is above the first predefined threshold, for example that the determined temperature is above the first predefined threshold temperature, it is concluded that the temperature sensor heats up faster than it should. Thus, if the determined temperature of the temperature sensor is higher than normal and/or rises faster than normal, it is concluded that the thermal coupling between the temperature sensor and the battery cell is impaired or deteriorated. That is because in case of such an impaired thermal coupling, for example in case of a sensor lift off, the temperature sensor cannot dissipate or pass its heat to the battery cell and therefore heats up quickly and to high temperatures. As the heating current is provided by the high voltage side of the battery system, it is ensured that the heating current is high enough to heat up the temperature sensor to temperatures helpful or needed for determining the thermal coupling.

With the method and battery system according to the disclosure, it may thus be reliably determined whether the physical connection between the temperature sensor and the battery cell the temperature sensor is attached to is weakening or breaking down, i.e. if the temperature is "lifting off'. The temperature sensor may then be replaced or the connection repaired.

According to one embodiment of the method, the determining of the temperature or temperature-dependent property of the temperature sensor includes applying a measuring voltage to the temperature sensor, measuring a voltage drop over the temperature sensor and determining the temperature or temperature-dependent property of the temperature sensor based on the voltage drop. According to a respective embodiment of the battery system, the control unit is adapted to determine the temperature or temperature-dependent property of the temperature sensor by applying a measuring voltage to the temperature sensor via a measuring circuit, measuring a voltage drop over the temperature sensor and determining the temperature or temperature-dependent property of the temperature sensor based on the voltage drop. As outlined before, the resistance of the temperature sensor may vary depending on the temperature of the temperature sensor. For example, the temperature sensor may include a thermistor. Thus, a measuring voltage that is applied to the temperature sensor will experience a different voltage drop depending on the electrical resistance of the temperature sensor. According to the present embodiment, the temperature or temperature-dependent property of the temperature sensor is determined based on this voltage drop. This allows for a simple and efficient determining of the thermal coupling between the temperature sensor and the battery cell. The measuring voltage may be applied by the same measuring circuit that is used for measuring the temperature of the battery cell during regular operation of the temperature sensor. Thus, in other words, a measuring circuit that is already present in the battery system may be used for determining the temperature of the temperature sensor according to the disclosure.

According to an embodiment, the measuring voltage is supplied by a low voltage side of the battery system. The low voltage side is adapted to provide power to a battery management system, BMS, of the battery system. Correspondingly, the control unit of the battery system may be adapted to apply the measuring voltage from the low voltage side to the temperature sensor. The measuring circuit may be powered by the low voltage side. As mentioned above, the battery system may include the high voltage side and a low voltage side. The battery system may include a converter, for example a (bidirectional) DC-DC converter, adapted to transfer energy between the high voltage side and the low voltage side in one or both directions. The low voltage side of the battery system may provide power to the BMS. That is, the low voltage side may provide a (low) voltage suitable for supplying the BMS. Generally, a board net of an electric vehicle includes a low voltage board net powered by the low voltage side of the battery system and a high voltage board net powered by the high voltage side of the battery system. The BMS may include the control unit of the battery system according to the disclosure, which may thus be powered by the low voltage side and form part of the low voltage board net. The plurality of battery cells may form part of the high voltage board net. While the heating current according to the present disclosure is provided by the high voltage side of the battery system, the measuring voltage for determining the temperature or temperature-dependent property of the temperature sensor may be provided by the low voltage side of the battery system. This allows for a simple and efficient determining of the thermal coupling between the temperature sensor and the battery cell. As mentioned, the measuring voltage may be applied by the same measuring circuit that is used for measuring the temperature of the battery cell during regular operation of the temperature sensor, said measuring circuit being powered by the low voltage side of the battery system.

According to an embodiment, the battery system includes a diode connected to the first node of the temperature sensor for limiting a voltage in the measuring circuit when the heating current is applied to the temperature sensor. During the heating of the temperature sensor, high voltages may occur in the battery system, for example in the measuring circuit, because of the connection of the temperature sensor to the high voltage side of the battery system. The diode may, during the heating of the temperature sensor, protect the measuring circuit from such high voltages. This allows for a simple and efficient determining of the thermal coupling between the temperature sensor and the battery cell.

According to an embodiment of the method, the switching element is opened before the determining of the temperature or temperature-dependent property of the temperature sensor. According to a corresponding embodiment of the battery system, the control unit is adapted to open the switching element before determining the temperature or temperature-dependent property of the temperature sensor. Opening the switching element means disconnecting the temperature sensor from the high voltage side of the battery system, as explained above. Thus, according to the present embodiment, the temperature sensor is disconnected from the high voltage side during the temperature determination. This may ensure a more precise measurement and may thus allow for a simple and efficient determining of the thermal coupling between the temperature sensor and the battery cell.

According to an embodiment, the method is performed at a system start-up of the battery system. According to a corresponding embodiment of the battery system, the control unit is adapted to determine the thermal coupling between the temperature sensor and the battery cell of the battery system at a system start-up of the battery system. Thus, the method according to the disclosure may be performed at a system start-up, for example at every system start-up, of the battery system. The battery system may start-up, for example, when an electric vehicle including the battery system is started. Automatically performing the check of the thermal coupling between the temperature sensor and the battery cell at system start-up may verify the correct working of the temperature sensor before (every) use.

According to an embodiment, the method includes comparing the determined temperature or temperature-dependent property with a second predefined threshold. The second predefined threshold may be the same or may be lower than the first predefined threshold. The method may further include determining a defective sensor heating of the temperature sensor if the determined temperature or temperature-dependent property is lower than the second predefined threshold. According to a corresponding embodiment of the battery system, the control unit is adapted to compare the determined temperature or temperature-dependent property with a second predefined threshold, the second predefined threshold being the same or lower than the first predefined threshold, determine a defective sensor heating of the temperature sensor if the determined temperature or temperature-dependent property is lower than the second predefined threshold. As with the first predefined threshold, the second predefined threshold may for example be a second predefined threshold temperature, if a temperature is determined. Also, the second predefined threshold may be a second predefined threshold value for the temperature-dependent property, if the temperature-dependent property is determined, for example a resistance threshold if the temperature-dependent property is the resistance. Thus, if the determined temperature or temperature-dependent property is lower than it should be, it may be concluded that the sensor heating of the temperature sensor is defective. If there is absolutely not heat up, the heating mechanism is likely broken. For example, the switching element may not work as intended. According to the present embodiment, a defective sensor heating can be detected so that appropriate measures can be taken.

According to an embodiment, the control unit is part of a battery management system of the battery system. As mentioned above, it may be the BMS which performs the steps of the method of the present disclosure. The BMS, and possibly the measuring circuit, may be powered by the low voltage side of the battery system while the heating current to the temperature sensor is supplied by the high voltage side of the battery system. Using the BMS may allow for a simple and efficient determining of the thermal coupling between the temperature sensor and the battery cell.

According to an embodiment, the battery system includes a resistor arranged between the switching element and the temperature sensor for limiting the current flow through the temperature sensor. This resistor may protect the temperature sensor from a dangerously high heating current which may result from the high voltage side of the battery system.

An embodiment of the disclosure relates to an electric vehicle including the battery system according to the disclosure. The electric vehicle may include the battery system as a traction battery.

### Specific Embodiments

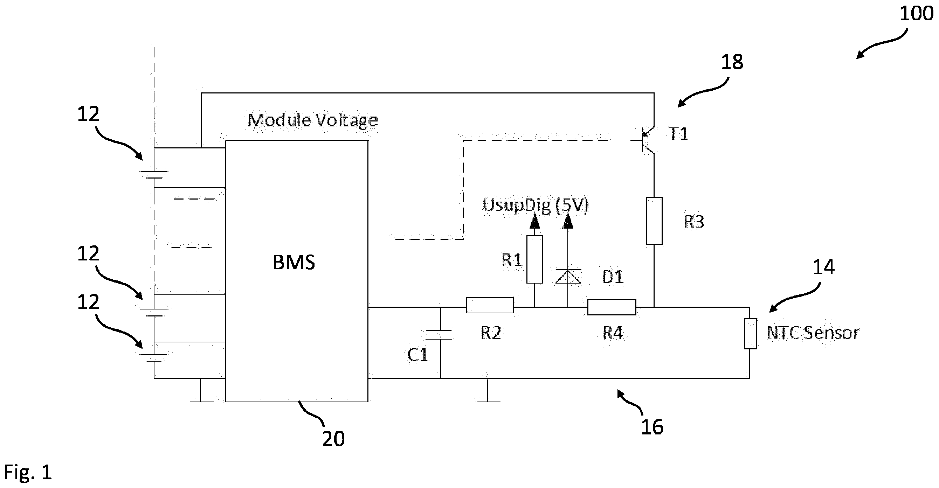

Fig. 1 shows schematically a circuit diagram of a battery system 100 according to the invention. The battery system 100 includes a (not-shown) housing and a plurality of battery cells 12 disposed in the housing. The battery cells 12 are arranged to form a battery module wherein the battery cells 12 are electrically connected in series such that their voltages add up to a module voltage. The battery cells 12 thereby provide a high voltage side of the battery system 100.

The battery system 100 further includes a temperature sensor 14 including a Negative Temperature Coefficient (NTC) thermistor, and a measuring circuit generally denoted with reference sign 16. The temperature sensor 14 is attached to the outer surface of one of the battery cells 12 (not shown) so as to monitor the temperature of said battery cell 12. A control unit of the battery system, which in the present embodiment is realized by a battery management system (BMS) 20, is adapted to measure via the measuring circuit the temperature of the battery cell 12 the temperature sensor 14 is attached to. The measuring circuit 16 may include the temperature sensor 14, the BMS 20, resistors R2, R4, and capacitor C1.

Further, the battery system 100 includes a switching element 18 which in the present embodiment includes a transistor T1. The switching element 18 is interconnected between the high voltage side of the battery system and the temperature sensor. That is, a first node of the temperature sensor 14 is connected to the switching element 18 and second node of the temperature sensor 14 is connected to ground.

The switching element 18 is switchable between a closed position where the switching element establishes a connection between the high voltage side of the battery system 100 and the temperature sensor 14 thereby applying a heating current to the temperature sensor 14, and an open position where the connection between the high voltage side of the battery system 100 and the temperature sensor 14 is interrupted.

The battery system 100 of Fig. 1 is adapted to perform a method of determining a thermal coupling between a temperature sensor 14 and the battery cell 12 the temperature sensor 14 is attached to.

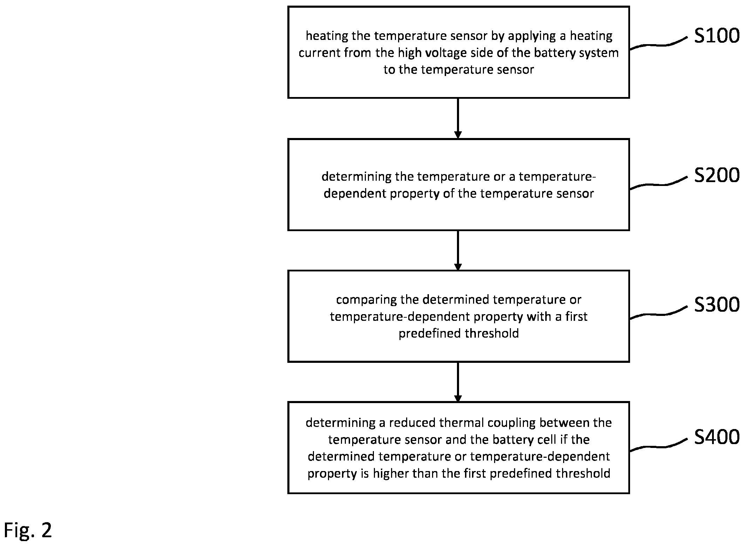

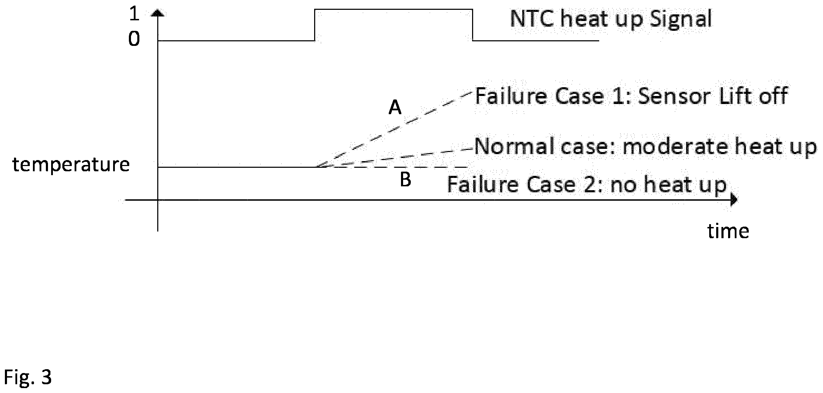

Fig. 2 illustrates the method via a flow chart. In a first step, S100, the BMS 20 closes the switching element 18 via a control signal as indicated by a dashed line. This will drive a heating current from the high voltage side through a resistor R3 to the temperature sensor 14. The heating current heats up the temperature sensor 14. Providing the heating current via the high voltage side ensures a heating current that is high enough to heat up the temperature sensor 14. Typical NTC sensors may have be adapted to not or only marginally self-heat during normal operation. With the higher voltage provided by the high voltage side of the cell stack, however, a heat up may be achieved. The resistor R3 may limit the current flow to a value suitable or allowed for the temperature sensor 14. This way a heat up signal for heating up the temperature sensor 14 is provided as illustrated in Fig. 3, wherein at value 1 the signal is provided (i.e. the switching element 18 is closed) and at value 0 the signal is not provided (i.e. the switching element 18 is open).

In a second step, S200, the BMS 20 determines the temperature or a temperature-dependent property of the temperature sensor 14 via the measuring circuit 16. For example, the BMS 20 may determine an electrical resistance of the temperature sensor 14. As the temperature sensor 14 is or includes an NTC thermistor, the resistance of the temperature sensor 14 decreases with increasing temperature. Thus, the resistance is a temperature-dependent property. The BMS 20 may record the behavior of the resistance of the temperature sensor 14 with respect to the increasing temperature and may derive a temperature curve from this. For example, the BMS 20 may apply a measuring voltage to the temperature sensor 14 and may measure a voltage drop over the temperature sensor 14. The temperature curve may be determined based on the voltage drop. Also, the measured resistance values of the temperature sensor 14 may be converted, for example via a voltage divider, to a voltage-temperature-curve which than may be measured by the BMS 20.

Such temperatures curves are shown schematically in Fig. 3. The measuring circuit 16 may be basically the same circuit that is used, during regular operation of the temperature sensor 14, for measuring/monitoring the temperature of the battery cell 12 the temperature sensor 14 is attached to. This allows for a simple and effective design of the measuring circuit 16. The measuring circuit 16 may include a diode D1 which may limit the voltage in the measuring circuit 16 in the case of the switched on T1 transistor, i.e. in case of the switching element 18 being closed. This way the measuring circuit 16 may be protected from the high voltages of the high voltage side.

In a third step, S300, the BMS 20 compares the determined temperature curve with a first predefined threshold temperature curve. The predefined threshold temperature curve is denoted as "normal case: moderate heat up" in Fig. 3 and means a normal temperature curve that would be expected for a heating of the temperature sensor 14 if the temperature sensor 14 were correctly attached to the battery cell 12, i.e. for a "normal case" where the thermal coupling between the temperature sensor 14 and the battery cell 12 is unimpaired. For example, the BMS 20, when heating the temperature sensor 14, may determine a temperature curve A having higher temperature values over time than the in the normal case. As another example, the BMS 20, when heating the temperature sensor 14, may determine a temperature curve B having lower temperature values over time than the in the normal case.

In step S400, the temperature curve A is determined to have higher values than the normal temperature curve which is interpreted as a reduced thermal coupling between the temperature sensor 14 and the battery cell 12, denoted a "failure case 1: sensor lift off" in Fig. 3. That is, if the temperature sensor 14 heats up that fast and to such high temperatures, the temperature sensor 14 can likely not transfer the heat to the battery cell 12 which means that the thermal coupling is likely impaired, i.e. the temperature sensor 14 is likely no longer correctly attached to the battery cell 12.

Further, in step S400 or in a subsequent step, the BMS 20 may determine a defective sensor heating of the temperature sensor 14 if the determined temperature curve B is lower than the normal temperature curve. That is, the temperature curve B may indicate a defective sensor heating of the temperature sensor 14 which is denoted as "failure case 2: no heat up" in Fig. 3.

Thus, with the method and battery system according to the disclosure, it may be reliably determined whether the physical connection between the temperature sensor 14 1and the battery cell 12 the temperature sensor 14 is attached to is weakening or breaking down, i.e. if the temperature is "lifting off". The temperature sensor 14 may then be replaced or the connection repaired.

### Reference signs

- 100: battery system
- 12: battery cells
- 14: temperature sensor
- 16: measuring circuit
- 18: switching element
- 20: battery management system (BMS)

## Claims

1. A method for determining a thermal coupling between a temperature sensor (14) and a battery cell (12) of a battery system (100), the method comprising:
heating the temperature sensor (14) by applying a heating current to the temperature sensor (14), the heating current being supplied by a high voltage side of the battery system (100),
determining the temperature or a temperature-dependent property of the temperature sensor (14),
comparing the determined temperature or temperature-dependent property with a first predefined threshold,
determining a reduced thermal coupling between the temperature sensor (14) and the battery cell (12) if the determined temperature or temperature-dependent property is higher than the first predefined threshold.

2. The method of claim 1, wherein the determining of the temperature or temperature-dependent property of the temperature sensor (14) comprises applying a measuring voltage to the temperature sensor (14), measuring a voltage drop over the temperature sensor (14) and determining the temperature or temperature-dependent property of the temperature sensor (14) based on the voltage drop.

3. The method of claim 2, wherein the measuring voltage is supplied by a low voltage side of the battery system (100), the low voltage side being adapted to provide power for a battery management system (20) of the battery system (100).

4. The method of any one of the preceding claims, wherein a switching element (18) is interconnected between the high voltage side of the battery system (100) and the temperature sensor (14), wherein the method comprises:
closing the switching element (18) to apply the heating current to the temperature sensor (14) by establishing the connection between the high voltage side of the battery system (100) and the temperature sensor (14), and
opening the switching element (18) before the determining of the temperature or temperature-dependent property of the temperature sensor (14).

5. The method of any one of the preceding claims, further comprising:
comparing the determined temperature or temperature-dependent property with a second predefined threshold, the second predefined threshold being the same or lower than the first predefined threshold,
determining a defective sensor heating of the temperature sensor (14) if the determined temperature or temperature-dependent property is lower than the second predefined threshold.

6. The method of any one of the preceding claims, wherein the method is performed at a system start-up of the battery system (100).

7. A battery system (100) adapted to determine a thermal coupling between a temperature sensor (14) and a battery cell of a battery system (100), the battery system (100) comprising:
a housing,
a plurality of battery cells (12) disposed in the housing, the plurality of battery cells (12) providing a high voltage side of the battery system (100),
a temperature sensor (14),
a switching element (18) interconnected between the high voltage side of the battery system (100) and the temperature sensor (14),
wherein a first node of the temperature sensor (14) is connected to the switching element (18) and second node of the temperature sensor (14) is connected to ground, wherein the switching element (18) is switchable between a closed position where the switching element (18) establishes a connection between the high voltage side of the battery system (100) and the temperature sensor (14) for applying a heating current to the temperature sensor (14), and an open position where the connection between the high voltage side of the battery system (100) and the temperature sensor (14) is interrupted,
a control unit (20), the control unit (20) being adapted to:
close the switching element (18) to apply the heating current to the temperature sensor (14) by establishing the connection between the high voltage side of the battery system (100) and the temperature sensor (14),
determine the temperature or a temperature-dependent property of the temperature sensor (14),
compare the determined temperature or temperature-dependent property with a first predefined threshold temperature,
determine a reduced thermal coupling between the temperature sensor (14) and the battery cell (12) if the determined temperature or temperature-dependent property is higher than the first predefined threshold temperature.

8. The battery system (100) according to claim 7, wherein the control unit (20) is adapted to determine the temperature or temperature-dependent property of the temperature sensor (14) by applying a measuring voltage to the temperature sensor (14) via a measuring circuit (16), measuring a voltage drop over the temperature sensor (14) and determining the temperature or temperature-dependent property of the temperature sensor (14) based on the voltage drop.

9. The battery system (100) according to claim 8, comprising a diode connected to the first node of the temperature sensor (14) for limiting a voltage in the measuring circuit (16) when the heating current is applied to the temperature sensor (14).

10. The battery system (100) according to claim 8 or 9, further comprising a low voltage side adapted to provide power for a battery management system (20) of the battery system (100), wherein the measuring voltage is supplied by the low voltage side of the battery system (100).

11. The battery system (100) according to any one of claims 7 to 10, wherein the control unit (20) is adapted to open the switching element (18) before determining of the temperature or temperature-dependent property of the temperature sensor (14).

12. The battery system (100) according to any one of claims 7 to 11, wherein the control unit (20) is adapted to:
compare the determined temperature or temperature-dependent property with a second predefined threshold, the second predefined threshold being the same or lower than the first predefined threshold,
determine a defective sensor heating of the temperature sensor (14) if the determined temperature or temperature-dependent property is lower than the second predefined threshold.

13. The battery system (100) according to any one of claims 7 to 12, wherein the control unit (20) is part of a battery management system of the battery system (100).

14. The battery system (100) according to any one of claims 7 to 13, comprising a resistor arranged between the switching element (18) and the temperature sensor (14) for limiting the current flow through the temperature sensor (14).

15. An electric vehicle including the battery system (100) according to any one of claims 7 to 14.

## Amended claims

### Amended claims in accordance with Rule 137(2) EPC.

1. A method for determining a thermal coupling between a temperature sensor (14) and a battery cell (12) of a battery system (100), the method comprising:
heating the temperature sensor (14) by applying a heating current to the temperature sensor (14), the heating current being supplied by a plurality of battery cells (12) of a high voltage side of the battery system (100),
determining the temperature or a temperature-dependent property of the temperature sensor (14),
comparing the determined temperature or temperature-dependent property with a first predefined threshold,
determining a reduced thermal coupling between the temperature sensor (14) and the battery cell (12) of the plurality of battery cells (12), if the determined temperature or temperature-dependent property is higher than the first predefined threshold.

2. The method of claim 1, wherein the determining of the temperature or temperature-dependent property of the temperature sensor (14) comprises applying a measuring voltage to the temperature sensor (14), measuring a voltage drop over the temperature sensor (14) and determining the temperature or temperature-dependent property of the temperature sensor (14) based on the voltage drop.

3. The method of claim 2, wherein the measuring voltage is supplied by a low voltage side of the battery system (100), the low voltage side being adapted to provide power for a battery management system (20) of the battery system (100).

4. The method of any one of the preceding claims, wherein a switching element (18) is interconnected between the high voltage side of the battery system (100) and the temperature sensor (14), wherein the method comprises:
closing the switching element (18) to apply the heating current to the temperature sensor (14) by establishing the connection between the high voltage side of the battery system (100) and the temperature sensor (14), and
opening the switching element (18) before the determining of the temperature or temperature-dependent property of the temperature sensor (14).

5. The method of any one of the preceding claims, further comprising:
comparing the determined temperature or temperature-dependent property with a second predefined threshold, the second predefined threshold being the same or lower than the first predefined threshold,
determining a defective sensor heating of the temperature sensor (14) if the determined temperature or temperature-dependent property is lower than the second predefined threshold.

6. The method of any one of the preceding claims, wherein the method is performed at a system start-up of the battery system (100).

7. A battery system (100) adapted to determine a thermal coupling between a temperature sensor (14) and a battery cell of a battery system (100), the battery system (100) comprising:
a housing,
a plurality of battery cells (12) disposed in the housing, the plurality of battery cells (12) providing a high voltage side of the battery system (100),
a temperature sensor (14),
a switching element (18) interconnected between the high voltage side of the battery system (100) and the temperature sensor (14),
wherein a first node of the temperature sensor (14) is connected to the switching element (18) and second node of the temperature sensor (14) is connected to ground, wherein the switching element (18) is switchable between a closed position where the switching element (18) establishes a connection between the high voltage side of the battery system (100) and the temperature sensor (14) for applying a heating current to the temperature sensor (14), and an open position where the connection between the high voltage side of the battery system (100) and the temperature sensor (14) is interrupted,
a control unit (20), the control unit (20) being adapted to:
close the switching element (18) to apply the heating current to the temperature sensor (14) by establishing the connection between the high voltage side of the battery system (100) and the temperature sensor (14),
determine the temperature or a temperature-dependent property of the temperature sensor (14),
compare the determined temperature or temperature-dependent property with a first predefined threshold temperature,
determine a reduced thermal coupling between the temperature sensor (14) and the battery cell (12) if the determined temperature or temperature-dependent property is higher than the first predefined threshold temperature.

8. The battery system (100) according to claim 7, wherein the control unit (20) is adapted to determine the temperature or temperature-dependent property of the temperature sensor (14) by applying a measuring voltage to the temperature sensor (14) via a measuring circuit (16), measuring a voltage drop over the temperature sensor (14) and determining the temperature or temperature-dependent property of the temperature sensor (14) based on the voltage drop.

9. The battery system (100) according to claim 8, comprising a diode connected to the first node of the temperature sensor (14) for limiting a voltage in the measuring circuit (16) when the heating current is applied to the temperature sensor (14).

10. The battery system (100) according to claim 8 or 9, further comprising a low voltage side adapted to provide power for a battery management system (20) of the battery system (100), wherein the measuring voltage is supplied by the low voltage side of the battery system (100).

11. The battery system (100) according to any one of claims 7 to 10, wherein the control unit (20) is adapted to open the switching element (18) before determining of the temperature or temperature-dependent property of the temperature sensor (14).

12. The battery system (100) according to any one of claims 7 to 11, wherein the control unit (20) is adapted to:
compare the determined temperature or temperature-dependent property with a second predefined threshold, the second predefined threshold being the same or lower than the first predefined threshold,
determine a defective sensor heating of the temperature sensor (14) if the determined temperature or temperature-dependent property is lower than the second predefined threshold.

13. The battery system (100) according to any one of claims 7 to 12, wherein the control unit (20) is part of a battery management system of the battery system (100).

14. The battery system (100) according to any one of claims 7 to 13, comprising a resistor arranged between the switching element (18) and the temperature sensor (14) for limiting the current flow through the temperature sensor (14).

15. An electric vehicle including the battery system (100) according to any one of claims 7 to 14.
